(19) Europäisches Patentamt
European Patent Office
Office européen des brevets

(11) EP 1 518 908 B1

(12) **EUROPEAN PATENT SPECIFICATION**

(45) Date of publication and mention of the grant of the patent:
**30.05.2007 Bulletin 2007/22**

(51) Int Cl.:
***C09D 11/00*** *(2006.01)*

(21) Application number: **04022487.5**

(22) Date of filing: **22.09.2004**

(54) **Ink composition for electrostatic ink-jet recording and method of ink-jet recording**

Tintenzusammensetzung für elektrostatische Tintenstrahlaufzeichnung und Tintenstrahlaufzeichnungsverfahren

Composition d'encre pour enregistrement électrostatique par jet d'encre et procédé d'enregistrement par jet d'encre

(84) Designated Contracting States:
**AT BE BG CH CY CZ DE DK EE ES FI FR GB GR HU IE IT LI LU MC NL PL PT RO SE SI SK TR**

(30) Priority: **25.09.2003 JP 2003333519**

(43) Date of publication of application:
**30.03.2005 Bulletin 2005/13**

(73) Proprietor: **FUJIFILM Corporation**
**Minato-ku**
**Tokyo (JP)**

(72) Inventor: **Kasai, Seishi**
**Fuji Photo Film, Co., Ltd.**
**Haibara-gun**
**Shizuoka (JP)**

(74) Representative: **HOFFMANN EITLE**
**Patent- und Rechtsanwälte**
**Arabellastrasse 4**
**81925 München (DE)**

(56) References cited:
**EP-A- 0 635 380**
**US-A- 5 952 048**
**US-A1- 2002 098 435**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 518 908 B1

## Description

## Background of the Invention

### 1. Field of the Invention

The present invention relates to an ink composition for electrostatic ink-jet recording and a method of ink-jet recording. More particularly, the invention relates to an ink composition for electrostatic ink-jet recording and a method of ink-jet recording, which enable high-quality images to be fixed to a recording medium at a low temperature and a high speed.

### 2. Description of the Related Art

Known image-recording techniques in which an image is formed on a recording medium, e.g., paper, based on image data signals include electrophotographic recording, thermal transfer recording of the sublimation type or melting type, and ink-jet recording. Of these techniques, electrophotographic recording has a drawback that the system is complicated and the apparatus is expensive because it necessitates a process in which an electrostatic latent image is formed on a photoreceptor drum through charging and exposure. The apparatus itself for thermal transfer recording is less expensive than that for electrophotographic recording. However, thermal transfer recording has problems, for example, that the use of ribbons not only results in a high running cost but also yields a waste. On the other hand, ink-jet recording is advantageous in that the apparatus is inexpensive and an ink can be efficiently used because the ink is ejected only to the necessary image areas to directly form an image on the recording medium. Furthermore, this recording technique is reduced in noise generation. Ink-jet recording is hence an excellent image-recording technique.

Examples of ink-jet recording techniques include a method in which ink droplets are flown by the pressure of a vapor generated by the heat of a heating element, a method in which ink droplets are flown by mechanical pressure pulses generated by a piezoelectric element, and a method in which ink droplets containing charged particles are flown while utilizing an electrostatic field (see Japanese Patent No. 3, 315, 334 and U.S. Patent No. 6,158,844). The method in which ink droplets are flown by a vapor or mechanical pressure has a drawback that the direction of ink droplet flight cannot be controlled and there are cases where it is difficult to precisely deliver ink droplets to the desired positions on a recording medium due to ink nozzle deformation or air convection.

On the other hand, the method utilizing an electrostatic field is capable of precisely delivering ink droplets to the desired positions because the direction of ink droplet flight is controlled by means of an electrostatic field. This method can hence produce an image-bearing matter (printed matter) having high image quality and is excellent.

For the ink-jet recording utilizing an electrostatic field, ink compositions comprising at least a dispersion medium and a charged particle comprising a colorant are used (see JP-A-8-291267 andU.S.Patent No. 5, 952, 048). Ink compositions containing a colorant can be prepared as inks of four colors, i.e., yellow,
magenta, cyan, and black, by changing the colorant. Inks of special colors, e.g., gold and silver, can also be prepared. The method of recording with such ink compositions is hence useful because a color image-bearing matter (printed matter) can be produced. However, a device for fixing to paper is necessary for stably outputting color image-bearing matters (printed matters) while maintaining a high speed and high image quality. Furthermore, in ink-jet recording systems, in which the dispersion medium is present in image areas and in the paper at the time of fixing, low-temperature high-speed image fixing should be realized without impairing image quality. It has been difficult with any of the current techniques to attain such fixing which satisfy all the requirements.

US-A-2002/098435 discloses the use of wax-coated pigment granules as colourants in electrophotographic toners and developers, powder coating materials, ink-jet inks, electret fibres and colour fibres. The coated pigment granules may be prepared by adding a wax to a pigment, for example, during the finish process in an organic or aqueous-organic medium before removing the organic solvent and spray-drying the resultant aqueous pigment suspension.

EP-A-0 635 380 relates to a colouring composition for image recording containing a pigment and a resin, said pigment being a coating clad pigment with a thin film coating of a hardened polymer having a polar group. The polar group is a basic or an acidic group, whilst the resin serves as a dispersing medium/agent.

Summary of the Invention

An object of the invention, which has been achieved in view of the problems of related-art techniques described above, is to provide an ink composition for electrostatic ink-j et recording and a method of ink-jet recording which enable high-quality images to be fixed to a recording medium at a low temperature and a high speed.

In order to accomplish the objects above, the invention provides the following.

(1) An ink composition for electrostatic ink-jet recording, comprising :

a dispersion medium; and

a charged particle comprising a colorant and at least one of an onium salt compound and an onium salt group-containing polymer, wherein the colorant is coated with a coating material comprising a polymer having a repeat unit represented by at least one of general formulae (1)-(4):

Formula (1)

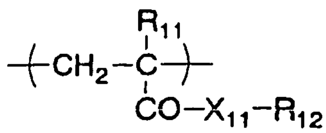

Formula (2)

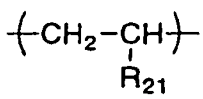

Formula (3)

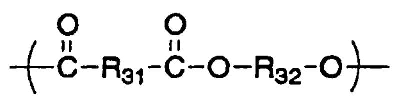

Formula (4)

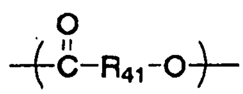

in which $X_{11}$ represents an oxygen atom or -N ($R_{13}$) -;
$R_{11}$ represents a hydrogen atom or methyl;
$R_{12}$represents a hydrocarbon group having 1 to 30 carbon atoms;
$R_{13}$ represents a hydrogen atom or a hydrocarbon group having 1 to 30 carbon atoms;
$R_{21}$ represents a hydrogen atom or a hydrocarbon group having 1 to 20 carbon atoms; and
$R_{31}$, $R_{32}$, and $R_{41}$ each represents a bivalent hydrocarbon group having 1 to 20 carbon atoms.

(2) The ink composition for electrostatic ink-jet recording as described in (1), wherein the coating material is present in an amount of 0.1 to 40% by weight.

(3) The ink composition for electrostatic ink-jet recording as described in (1) above,
wherein the onium salt compound is at least one selected from the group consisting of an ammonium compound, an oxonium compound, a sulfonium compound, a selenonium compound and a phosphonium compound.

(4) The ink composition for electrostatic ink-jet recording as described in (1) above,
wherein the onium salt group-containing polymer has at least one group selected from an ammonium group, an oxonium group, a sulfonium group, a selenonium group and a phosphonium group.

(7) A method of ink-jet recording, comprising: flying an ink droplet of an ink composition as described in (1) using.

## Brief Description of the Drawings

Fig. 1 is a diagrammatic view illustrating the overall constitution of one example of ink-jet printers usable in the invention;

Fig. 2 is a slant view illustrating the constitution of an ink-j et head in an ink-j et recorder for use in the invention (The edge of the guard electrode surrounding each ejection nozzle is not shown for an easy understanding.); and

Fig. 3 is a sectional side view illustrating the distribution of charged particles in the ink-jet head shown in Fig. 2,

which has many ejection nozzles (the section being taken in the direction of the arrows along the line X-X of Fig. 2).

**Detailed Description of the Invention**

The ink composition of the invention comprises at least a dispersion medium and a chargedparticle comprising a colorant, and the charged particle contains at least one onium salt, in more detail, at least one of the onium salt compound and an onium salt group-containing polymer.

The ingredients constituting the ink composition of the invention will be explained below.

[Onium Salt Compound]

Examples of the onium salt compound to be used in the invention include an ammonium compound, an oxonium compound, a sulfonium compound, a selenonium compound, and a phosphonium compound. Preferred examples thereof include an ammonium compound, a sulfonium compound, and a phosphonium compound.

Specific examples of the onium salt compound comprising an ammonium compound, a sulfonium compound, and a phosphonium compound include a compound represented by the following general formula (I).

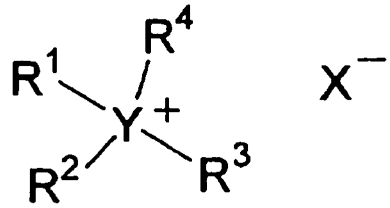

(I)

In the formula, Y represents a nitrogen, sulfur, or phosphorus atom. $R^1$ to $R^4$ may be the same or different and each represents a hydrogen atom or a hydrocarbon group. The hydrocarbon group represented by each of $R^1$ to $R^4$ is an alkyl group having 1 to 22 carbon atoms, an alkenyl group, an aralkyl group, an alicyclic group, an aryl group, or a bridged cyclic hydrocarbon group, which each may be substituted.

Preferred examples of the hydrocarbon groups represented by $R^1$ to $R^4$ include optionally substituted alkyl groups having 1 to 22 carbon atoms (e.g., methyl, ethyl, propyl, butyl, hexyl, heptyl, octyl, nonyl, decyl, dodecyl, tridecyl, tetradecyl, hexadecyl, octadecyl, eicosyl, docosyl, 2-chloroethyl, 2-bromoethyl, 2-cyanoethyl, 2-methoxycarbonylethyl, 2-methoxyethyl, and 3-bromopropyl), optionally substituted alkenyl groups having 4 to 18 carbon atoms (e.g., 2-methyl-1-propenyl, 2-butenyl, 2-pentenyl, 3-methyl-2-pentenyl, 1-pentenyl, 1-hexenyl, 2-hexenyl, 4-methyl-2-hexenyl, decenyl, dodecenyl, tridecenyl, hexadecenyl, octadecenyl, and linolenyl), optionally substituted aralkyl groups having 7 to 12 carbon atoms (e.g., benzyl, phenethyl, 3-phenylpropyl, naphthylmethyl, 2-naphthylethyl, chlorobenzyl, bromobenzyl, methylbenzyl, ethylbenzyl, methoxybenzyl, dimethylbenzyl, and dimethoxybenzyl), optionally substituted alicyclic groups having 5 to 8 carbon atoms (e.g., cyclohexyl, 2-cyclohexylethyl, and 2-cyclopentylethyl), and optionally substituted aromatic groups having 6 to 12 carbon atoms (e.g., phenyl, naphthyl, tolyl, xylyl, propylphenyl, butylphenyl, octylphenyl, dodecylphenyl, methoxyphenyl, ethoxyphenyl, butoxyphenyl, decyloxyphenyl, chlorophenyl, dichlorophenyl, bromophenyl, cyanophenyl, acetylphenyl, methoxycarbonylphenyl, ethoxycarbonylphenyl, butoxycarbonylphenyl, acetamidophenyl, propionamidophenyl, and dodecyloylamidophenyl).

$R^1$ or $R^3$ may be bonded to $R^2$ or $R^4$, respectively, to represent an organic residue, which forms a ring in cooperation with the nitrogen atom. This organic residue may have one or more heteroatoms (e.g., oxygen, nitrogen, and sulfur atoms). Examples of the cyclic ammonium group thus formed include ones obtained by quaternizing morpholino, piperidino, pyridyl, imidazolyl, quinolyl, oxazolin, and the like.

Examples of the cyclic sulfonium group include ones obtained by quaternizing thiophene, tetrahydrothiophene, benzothiophene, and thiazole groups and the like.

$X^-$ represents an anion. Examples of the anion ingredient include halogens, monomethylsulfuric acid, and ions of alkyl- and arylbenzenesulfonic acids such as p-toluenesulfonic acid and phenylsulfonic acid. Examples thereof further include the various anions shown in JP-A-59-137960.

[Onium Salt Group-Containing Polymer]

Examples of an onium salt group of the onium salt group-containing polymer to be used in the invention include

an ammonium group, an oxonium group, a sulfonium group, a selenonium group, and a phosphonium group. Preferred examples thereof include an ammonium group, a sulfonium group, and a phosphonium group.

Examples of ingredients usable for constituting the main chain of the polymer include known monomers such as acrylic esters, methacrylic esters, acrylamide and analogues thereof, methacrylamide and analogues thereof, vinyl esters, styrene and analogues thereof, acrylic acid, methacrylic acid, acrylonitrile, maleic anhydride, and maleimide.

Examples of the acrylic esters include methyl acrylate, ethyl acrylate, (n- or iso-) propyl acrylate, (n-, iso-, sec-, or t-) butyl acrylate, amyl acrylate, 2-ethylhexyl acrylate, dodecyl acrylate, chloroethyl acrylate, 2-hydroxyethyl acrylate, 2-hdyroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, and 2-(hydroxyphenylcarbonyloxy)ethyl acrylate.

Examples of the methacrylic esters include methyl methacrylate, ethyl methacrylate, (n- or iso-) propyl methacrylate, (n-, iso-, sec-, or t-) butyl methacrylate, amyl methacrylate, 2-ethylhexylmethacrylate, dodecylmethacrylate, chloroethyl methacrylate, 2-hydroxyethyl methacrylate, 2-hdyroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, and 2-(hydroxyphenylcarbonyloxy)ethyl methacrylate.

Examples of the acrylamide and analogues thereof include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, and N-hydroxyethyl-N-methylacrylamide.

Examples of the methacrylamide and analogues thereof include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide, and N-hydroxyethyl-N-methylmethacrylamide.

Examples of the vinyl esters and analogues thereof include vinyl acetate, vinyl butyrate, and vinyl benzoate. Examples of the styrene and analogues thereof include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene, and carboxystyrene.

Besides these, commercial polymers containing onium salt groups and polymers obtained by converting commercial polymers into onium salts can be used without particular limitations.

The weight-average molecular weight (Mw) of the onium salt group-containing polymer is in the range of, for example, from 3,000 to 200,000, preferably from 4,000 to 150,000, more preferably from 5,000 to 120,000.

[Content of Onium Salt]

The total amount of at least one of (i) an onium salt compound and (ii) a monomer unit having the onium salt group of the onium salt group-containing polymer is preferably from 40 to 1% by weight, more preferably from 35 to 2% by weight, further more preferably from 30 to 3% by weight, based on the total amount of the charged particles.

[Dispersion Medium]

The dispersion medium to be used in the ink composition of the invention preferably is a dielectric liquid having a high electrical resistivity, specifically $10^{10}$ Ωcm or higher. In case where a dispersion medium having a low electrical resistivity is used, it electrically connects adjacent recording electrodes to each other. Such dispersion medium is hence unsuitable for use in this ink composition. The relative permittivity of the dielectric liquid is preferably 5 or lower, more preferably 4 or lower, even more preferably 3.5 or lower. Use of a dielectric liquid having a relative permittivity within this range is preferred because an electric field acts effectively on the charged particles in the dielectric liquid.

Examples of the dispersion medium to be used in the invention include linear or branched, aliphatic hydrocarbons, alicyclic hydrocarbons, aromatic hydrocarbons, halogen-substituted hydrocarbons of these kinds, and silicone oils. Specific examples thereof include hexane, heptane, octane, isooctane, decane, isodecane, decalin, nonane, dodecane, isododecane, cyclohexane, cyclooctane, cyclodecane, toluene, xylene, mesitylene, Isoper C, Isoper E, Isoper G, Isoper H, Isoper L, Isoper M (Isoper: trade name of Exxon Chemical Co.), Shellsol 70, Shellsol 71 (Shellsol: trade

name of Shell Oil), Amsco OMS and Amsco 4 60 solvents (Amsco: trade name of Spirits), and KF-96L (trade name of Shin-Etsu Silicones). Such solvents may be used alone or as a mixture of two or more thereof. The content of the dispersion medium is preferably in the range of from 20 to 99% by weight based on the whole ink composition. When the dispersion medium content is 20% by weight or higher, particles comprising a colorant can be satisfactorily dispersed in the dispersion medium. When the content thereof is 99% by weight or lower, a necessary colorant content can be satisfied.

[Colorant]

As the colorant for the ink composition of the invention, known dyes and pigments can be used. One or more colorants can be selected according to the use and purpose. For example, from the standpoint of the color tone of image-bearing matters obtained by recording (printed matters), it is preferred to use pigments (see, for example, *Ganryô Bunsan Anteika To Hyômen Shori Gijutsu/Hyôka,* published by Technical Information Institute Co., Ltd., December 25, 2001, 1st impression; hereinafter referred to also as "non-patent document 1"). By changing colorants, inks of four colors, i.e., yellow, magenta, cyan, and black, can be prepared. In particular, use of pigments for offset printing inks or proofs is preferred because the same color tones as in offset prints are obtained therewith.

Examples of pigments for yellow inks include monoazo pigments such as C.I. Pigment Yellow 1 and C.I. Pigment Yellow 74, disazo pigments such as C.I. Pigment Yellow 12 and C.I. Pigment Yellow 17, azo pigments of the non-benzidine type such as C.I. Pigment Yellow 180, azo lake pigments such as C.I. Pigment Yellow 100, condensation azo pigments such as C.I. Pigment Yellow 95, acid dye lake pigments such as C.I. Pigment Yellow 115, basic dye lake pigments such as C.I. Pigment Yellow 18, anthraquinone pigments such as Flavanthrone Yellow, isoindolinone pigments such as Isoindolinone Yellow 3RLT, quinophthalone pigments such as Quinophthalone Yellow, isoindoline pigments such as Isoindoline Yellow, nitroso pigments such as C.I. Pigment Yellow 153, metal complex azomethine pigments such as C.I. Pigment Yellow 117, and isoindolinone pigments such as C.I. Pigment Yellow 139.

Examples of pigments for magenta inks include monoazo pigments such as C.I. Pigment Red 3, disazo pigments such as C.I. Pigment Red 38, azo lake pigments such as C.I. Pigment Red 53:1 and C.I. Pigment Red 57:1, condensation azo pigments such as C.I. Pigment Red 144, acid dye lake pigments such as C.I. Pigment Red 174, basic dye lake pigments such as C.I. Pigment Red 81, anthraquinone pigments such as C.I. Pigment Red 177, thioindigo pigments such as C.I. Pigment Red 88, perinone pigments such as C.I. Pigment Red 194, perylene pigments such as C.I. Pigment Red 149, quinacridone pigments such as C.I. Pigment Red 122, isoindolinone pigments such as C.I. Pigment Red 180, and alizarin lake pigments such as C.I. Pigment Red 83.

Examples of pigments for cyan inks include disazo pigments such as C.I. Pigment Blue 25, phthalocyanine pigments such as C.I. Pigment Blue 15, acid dye lake pigments such as C.I. Pigment Blue 24, basic dye lake pigments such as C.I. Pigment Blue 1, anthraquinone pigments such as C.I. Pigment Blue 60, and alkali blue pigments such as C.I. Pigment Blue 18.

Examples of pigments for black inks include organic pigments such as aniline black pigments, iron oxide pigments, and carbon black pigments such as furnace black, lamp black, acetylene black, and channel black.

Processed pigments represented by microlith pigments such as Microlith-A, -K, and -T can also be advantageously used. Specific examples thereof include Microlith Yellow 4G-A, Microlith Red BP-K, Microlith Blue 4G-T, and Microlith Black C-T.

Furthermore, various pigments can be used according to need. For example, calcium carbonate or a titanium oxide pigment may be used as a pigment for white inks, and an aluminum powder and a copper alloy may be used for silver inks and gold inks, respectively.

From the standpoint of ease of ink production, it is basically preferred to use one pigment for one color. In some cases, however, it is also preferred to use a combination of two or more pigments for the purpose of color hue regulation. For example, a mixture of carbon black and phthalocyanine is used for black inks. Furthermore, pigments may be used after having been surface-treated by a known method, e.g., rosin treatment (see the above mentioned non-patent document 1).

The content of the colorant (pigment) is preferably in the range of from 0.1 to 50% by weight based on the whole ink composition. When the colorant content is 0.1% by weight or higher, the pigment amount is sufficient to give printed matters a fully satisfactory color. When the colorant content is 50% by weight or lower, particles comprising the colorant can be satisfactorily dispersed in the dispersion medium. The pigment content is more preferably from 1 to 30% by weight.

[Coating Material]

In preparing the ink composition of the invention, it is preferred to disperse (reduce into particles) the colorant, e.g., a pigment, in a dispersion medium after the colorant is coated with a coating material rather than directly disperse

(reduce into particles) the colorant. Coating with a coating material shields the charges possessed by the colorant and enables desirable charge characteristics to be imparted. In addition, when the ink composition is delivered to a recording medium by ink-jet recording and then fixed by a heating device, e. g., a heater, in the invention, the coating material thermally melts in this fixing step to enable efficient fixing.

Examples of the coating material include rosins, rosin-modified phenolic resins, alkyd resins, (meth)acrylic polymers,polyurethanes, polyesters,polyamides,polyethylene, polybutadiene, polystyrene, poly(vinyl acetate), acetal-modified poly(vinylalcohol),and polycarbonates. From the standpoint of ease of particle formation, preferredmaterials of these are polymers having a weight-average molecular weight in the range of from 2,000 to 1,000,000 and a polydispersity coefficient (weight-average molecular weight/number-average molecular weight) in the range of from 1.0 to 5.0. From the standpoint of ease of fixing, polymers in which at least either of the softening point and the glass transition point is in the range of from 40 to 120°C are preferred. One or more onium salt group-containing polymers of the kind described above may constitute part or all of the coating material.

A polymer for use as the coating material in the invention is a polymer having a unit represented by at least one of the following general formulae (1) to (4).

Formula (1) 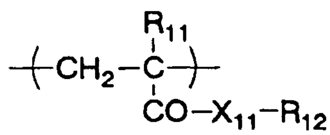

Formula (2) 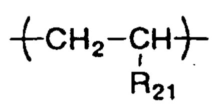

Formula (3) 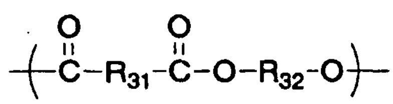

Formula (4) 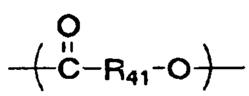

In the formulae, $X_{11}$ represents an oxygen atom or $-N(R_{13})-$. $R_{11}$ represents a hydrogen atom or methyl. $R_{12}$ represents a hydrocarbon group having 1 to 30 carbon atoms. $R_{13}$ represents a hydrogen atom or a hydrocarbon group having 1 to 30 carbon atoms. $R_{21}$ represents a hydrogen atom or a hydrocarbon group having 1 to 20 carbon atoms. $R_{31}$, $R_{32}$, and $R_{41}$ each represents a bivalent hydrocarbon group having 1 to 20 carbon atoms. The hydrocarbon groups represented by $R_{12}$, $R_{21}$, $R_{31}$, $R_{32}$, and $R_{41}$ may contain an ether bond, amino, hydroxy, or halogen substituent therein.

A polymer having a unit represented by general formula (1) can be obtained by the radical polymerization of the corresponding radical-polymerizable monomer(s) by a known method. Examples of the radical-polymerizable monomers to be used include (meth) acrylic ester and analogues thereof such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, dodecyl (meth)acrylate, stearyl (meth)acrylate, cyclohexyl (meth) acrylate, phenyl (meth) acrylate, benzyl (meth) acrylate, and 2-hydroxyethyl (meth)acrylate; and (meth)acrylamide and analogues thereof such as N-methyl(meth)acrylamide, N-propyl(meth)acrylamide, N-phenyl(meth)acrylamide, and N,N-dimethyl(meth)acrylamide.

A polymer having a unit represented by general formula (2) can be obtained by the radical polymerization of the corresponding radical-polymerizable monomer(s) by a known method. Examples of the radical-polymerizable monomers to be used include ethylene, propylene, butadiene, styrene, and 4-methylstyrene.

A polymer having a unit represented by general formula (3) can be obtained by the dehydrating condensation of the corresponding dicarboxylic acid(s) or acid anhydride(s) with the corresponding diol(s) by a known method. Examples of the dicarboxylic acids to be used include succinic anhydride, adipic acid, sebacic acid, isophthalic acid,

terephthalic acid, 1,4-phenylenediacetic acid, and diglycolic acid. Examples of the diols to be used include ethylene glycol, 1, 2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol, and diethylene glycol.

A polymer having a unit represented by general formula (4) can be obtained by subjecting the corresponding carboxylic acid(s) having a hydroxy group to dehydrating condensation by a known method or by subjecting cyclic ester (s) of the corresponding carboxylic acid(s) having a hydroxy group to ring-opening polymerization by a known method. Examples of the hydroxylated carboxylic acids or cyclic esters thereof to be used include 6-hydroxyhexanoic acid, 11-hydroxyundecanoic acid, hydroxybenzoic acid, and ε-caprolactone.

The polymer having a unit represented by at least one of general formulae (1) to (4) each may be a homopolymer made up of constituent units represented by one of general formulae (1) to (4) or may be a copolymer with other constituent ingredient(s). These polymers may be used alone or in combination of two or more thereof as the coating material.

Especially preferred examples of the coating material include polyesters, acrylics, styrene/acrylic copolymers, polyethylene, and polyurethanes. Optimal examples thereof include polyesters, acrylics, styrene/acrylic copolymers, and polyethylene.

The content of the coating material is preferably in the range of from 0.1 to 40% by weight based on the total amount of the ink composition. When the coating material content is 0.1% by weight or higher, the amount of the coating material is satisfied to obtain sufficient fixability. When the coating material content is 40% by weight or lower, particles comprising a colorant and the coatingmaterial canbe satisfactorily formed.

[Dispersant]

The ink composition of the invention is prepared, for example, through a step in which a mixture of a colorant, an onium salt, and a coating material is dispersed (reduced into particles) in a dispersion medium. It is more preferred to use a dispersant in order to regulate particle diameter and inhibit particle sedimentation.

Preferred examples of the dispersant include surfactants represented by sorbitan fatty acid esters such as sorbitan monooleate and polyethylene glycol fatty acid esters such as polyoxyethylene distearate. Examples thereof further include styrene/maleic acid copolymers and amine modifications thereof, copolymers of styrene and a (meth) acrylic compound, (meth)acrylic polymers, copolymers of polyethylene and a (meth)acrylic compound, rosin, BYK-160, 162, 164, and 182 (polyurethane polymers manufactured by Byk-Chemie GmbH), EFKA-401 and 402 (acrylic polymers manufactured by EFKA), and Solsperse 17000 and 24000 (polyester polymers manufactured by Zeneca Ltd.). From the standpoint of the long-term storage stability of the ink composition, polymers having a weight-average molecular weight in the range of from 1,000 to 1, 000, 000 and a polydispersity coefficient (weight-average molecular weight/ number-average molecular weight) in the range of from 1.0 to 7.0 are preferred in the invention. It is most preferred to use a graft polymer or a block polymer.

Polymers especially suitable for use as the dispersant in the invention are graft polymers comprising a polymeric component made up of constituent units represented by at least either of the following general formulae (5) and (6) and a polymeric component comprising constituent units represented by the following general formula (7) at least as a graft chain.

Formula (5)

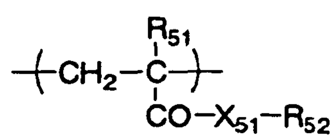

Formula (6)

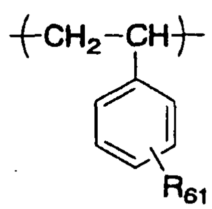

Formula (7) 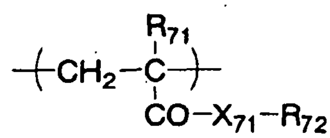

In the formulae, $X_{51}$ represents an oxygen atom or -N ($R_{53}$)-. $R_{51}$ represents a hydrogen atom or methyl. $R_{52}$ represents a hydrocarbon group having 1 to 10 carbon atoms. $R_{53}$ represents a hydrogen atom or a hydrocarbon group having 1 to 10 carbon atoms. $R_{61}$ represents a hydrogen atom, a hydrocarbon group having 1 to 20 carbon atoms, a halogen atom, hydroxyl, or an alkoxy group having 1 to 20 carbon atoms. $X_{71}$ represents an oxygen atom or -N ($R_{73}$)-. $R_{71}$ represents a hydrogen atom or methyl. $R_{72}$ represents a hydrocarbon group having 4 to 30 carbon atoms. $R_{73}$ represents a hydrogen atom or a hydrocarbon group having 1 to 30 carbon atoms. The hydrocarbon groups represented by $R_{52}$ and $R_{72}$ may contain an ether bond, amino, hydroxy, or halogen substituent therein.

The graft polymers can be obtained by polymerizing a radical-polymerizable monomer corresponding to general formula (7) preferably in the presence of a chain-transfer agent, introducing a polymerizable functional group into an end of the resultant polymer, and further copolymerizing therewith a radical-polymerizable monomer corresponding to general formula (5) or (6).

Examples of the radical-polymerizable monomer corresponding to general formula (5) include (meth)acrylic ester and analogues thereof such as methyl (meth)acrylate, ethyl (meth)acrylate, propyl (meth)acrylate, butyl (meth) acrylate, hexyl (meth)acrylate, cyclohexyl (meth) acrylate, phenyl (meth) acrylate, benzyl (meth) acrylate, and 2-hydroxyethyl (meth)acrylate; and (meth)acrylamide and analogues thereof such as N-methyl(meth)acrylamide, N-propyl(meth) acrylamide, N-phenyl(meth)acrylamide, and N,N-dimethyl(meth)acrylamide.

Examples of the radical-polymerizable monomer corresponding to general formula (6) include styrene, 4-methylstyrene, chlorostyrene, and methoxystyrene.

Examples of the radical-polymerizable monomer corresponding to general formula (6) include hexyl (meth) acrylate, octyl (meth)acrylate, 2-ethylhexyl (meth)acrylate, dodecyl (meth)acrylate, and stearyl (meth)acrylate.

Specific examples of those graft polymers include the polymers represented by the following structural formulae.

[BZ-1] 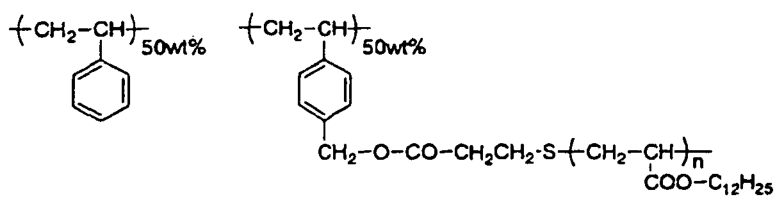

[BZ-2] 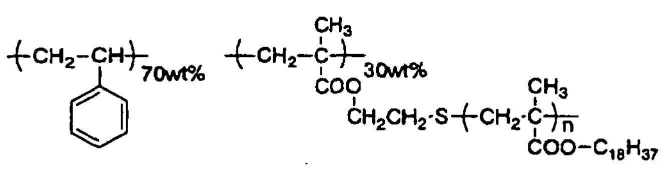

[BZ-3]

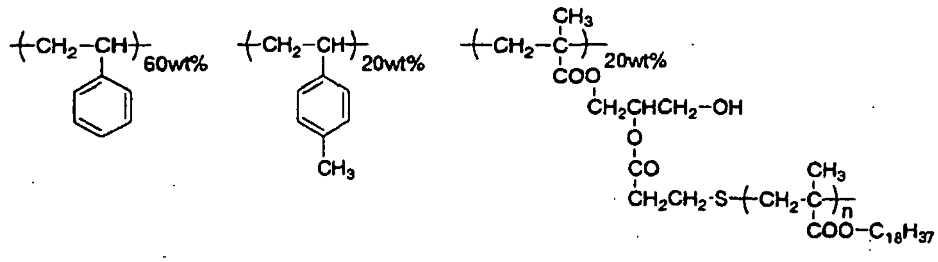

[BZ-4]

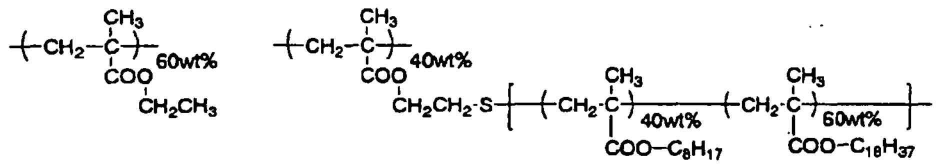

[BZ-5]

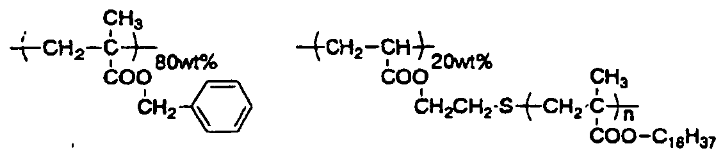

[BZ-6]

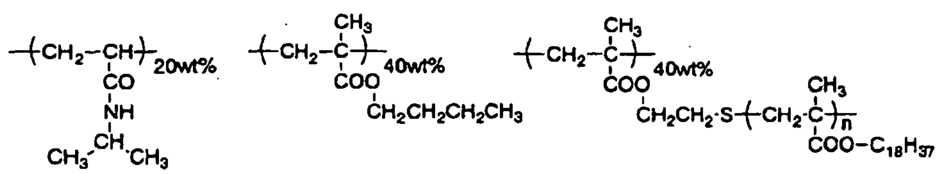

The graft polymers comprising a polymeric component comprising constituent units represented by at least either of general formulae (5) and (6) and a polymeric component comprising constituent units represented by general formula (7) at least as a graft chain may comprise units represented by general formula (5) and/or general formula (6) and units represented by general formula (7) as the only constitutional units, or may contain other constitutional component(s). The proportion of the polymeric component comprising a graft chain to the other polymeric component(s) is preferably from 10:90 to 90:10. Proportions thereof within this range are preferred because satisfactory particle-forming properties are obtained and a desired particle diameter is easy to obtain. Those polymers may be used alone or in combination of two or more thereof as a dispersant.

The content of the dispersant is preferably in the range of from 0.01 to 30% by weight based on the total amount of the ink composition. When the dispersant content is within this range, satisfactory particle-forming properties are obtained and a desired particle diameter can be obtained.

[Charge Control Agent]

It is preferred in the invention that a mixture of a colorant, an onium salt group, and a coating material be dispersed (reduced into particles) in a dispersion medium with the aid of a dispersant. It is more preferred to use the dispersant in combination with a charge control agent in order to regulate the amount of charges present on the particles.

Preferred examples of the charge control agent include metal salts of organic carboxylic acids, such as zirconium naphthenates and zirconium octenate; ammonium salts of organic carboxylic acids, such as tetramethylammonium

stearate; metal salts of organic sulfonic acids, such as sodium dodecylbenzenesulfonate and magnesium dioctyl sulfosuccinate; ammonium salts of organic sulfonic acids, such as tetrabutylammonium toluenesulfonate; polymers having carboxy groups in side chains, such as a carboxy-containing polymer obtained by modifying a styrene/maleic anhydride copolymer with an amine; polymers having carboxylic acid anion groups in side chains, such as a copolymer of stearyl methacrylate and tetramethylammonium methacrylate; polymers having nitrogen atoms in side chains, such as a copolymer of styrene and vinylpyridine, and polymers having ammonium groups in side chains, such as a copolymer of butyl methacrylate and N-(2-methacryloyloxyethyl)-N,N,N-trimethylammonium tosylate. The charges to be imparted to the particles may be either positive charges or negative charges. The content of the charge control agent is preferably in the range of from 0.0001 to 10% by weight based on the whole ink composition. The electrical conductivity of the ink composition of the invention is preferably from 10 to 300 nS/m, and the electrical conductivity of the charged particles is preferably 50% or more of the electrical conductivity of the ink composition. These requirements can be easily satisfied by increasing or reducing the content of the charge control agent.

[Other Ingredients]

In the invention, other ingredients such as, e.g., an antiseptic for septicity prevention and a surfactant for surface tension control can be further incorporated according to need.

[Production of Charged Particles]

Using the ingredients described above, the ink composition of the invention, which contains charged particles, can be produced by dispersing (reducing into particles) a colorant and an onium salt together with a coating material. Examples of methods for the dispersion (reduction into particles) include the following.

(1) A colorant, an onium salt, and a coating material are mixed together beforehand and the resultant mixture is dispersed (reduced into particles) using a dispersion medium and a dispersant.
(2) A colorant, an onium salt, a coating material, a dispersant, and a dispersion medium are simultaneously used to conduct the dispersion (reduction into particles), and a charge control agent is added thereto.
(3) A colorant, an onium salt, a coating material, a dispersant, a charge control agent, and a dispersion medium are simultaneously used to conduct the dispersion (reduction into particles).

Examples of apparatus for use in the mixing or dispersion include a kneader, dissolver, mixer, high-speed disperser, sand mill, roll mill, ball mill, attritor, and bead mill (see the above mentioned non-patent document 1).

The ink particle (the charged particle) in the invention desirably has a diameter of from 0.5 to 4 μm, preferably from 0.7 to 3.5 μm, more preferably from 0.8 to 3 μm. This size is larger than that of ordinary electrophotographic liquid developer toners (0.1 to 0.4 μm) and smaller than that of ordinary electrophotographic dry developer toners (5 to 15 μm).

The viscosity of the ink composition of the invention (20°C) is preferably in the range of from 0.5 to 5 mPa·s, more preferably in the range of from 0.8 to 4 mPa·s. The surface tension of the ink composition is preferably in the range of from 10 to 70 mN/m, more preferably in the range of from 15 to 50 mN/m.

[Ink-Jet Recorder]

In the invention, the ink composition described above is used to conduct recording on a recording medium by an ink-jet recording technique. It is preferred in the invention to use an ink-jet recording technique utilizing an electrostatic field. The ink-jet recording technique utilizing an electrostatic field is a technique in which a voltage is applied between a control electrode and a back electrode disposed on the back side of a recording medium, whereby charged particles of the ink composition are concentrated in the ejection site by an electrostatic force and flown from the ejection site to the recording medium. In the case where the charged particles are, for example, positive, the voltage to be applied between the control electrode and the back electrode is one, which makes the control electrode and the back electrode serve as a positive electrode and a negative electrode, respectively. The same effect is obtained by electrifying the recording medium in place of applying a voltage to the back electrode.

Examples of techniques for flying an ink include a method in which an ink is flown from the tip of a needle such as a syringe needle. The ink composition of the invention can be used by this method to conduct recording. However, it is difficult to replenish charged particles after the concentration/ejection of charged particles, making it difficult to stably conduct long-term recording. In the case where the ink is circulated in order to forcedly supply charged particles, the method to be used is one in which the ink is caused to overflow the tip of the syringe needle. Because of this, the meniscus shape in the syringe needle tip, which is the ejection site, is unstable and it is difficult to conduct stable recording. This technique is hence suitable for short-term recording.

On the other hand, a technique in which an ink composition is circulated without overflowing the ejection orifice is advantageously used. For example, this technique comprises circulating an ink in an ink chamber having an ejection orifice and applying a voltage to a control electrode disposed at the periphery of the ejection orifice to thereby concentrate the ink present in the ejection orifice and fly concentrated ink droplets from the tip of an ink guide pointing to a recording medium. In this technique, replenishment of charged particles by ink circulation and meniscus stabilization in the ejection site can be reconciled and, hence, recording can be stably conducted over long. Furthermore, in this technique, since that part of the ink, which is in contact with the surrounding atmosphere, is at the ejection orifice only and hence has an extremely small area, solvent vaporization is inhibited and ink properties are kept stable. Consequently, this technique is suitable for use in the invention.

Examples of the constitutions of ink-jet recorders in which the ink composition of the invention is suitable for use are shown below.

First, the apparatus shown in Fig. 1 in which four-color printing is conducted on one side of a recording medium is explained.

The ink-jet recorder 1 shown in Fig. 1 has: an ink circulation system3which feeds inks to ejection heads 2 composed of four-color ejection heads 2C, 2M, 2Y, and 2K for forming full-color images and which recovers the inks from the ejection heads 2; a head driver 4 which operates the ejection heads 2 based on an output from an external appliance not shown, e.g., a computer or RIP (raster image processor) ; and a position controller 5. The ink-jet printer 1 further has: a conveying belt 7 stretched on three rollers 6A, 6B, and 6C; a conveying belt locator 8 which is capable of detecting the width-direction position of the conveying belt 7 and is constituted of, e.g., an optical sensor; an electrostatic sucker 9 for holding a recording medium P on the conveying belt; and a charge eraser 10 and mechanical means 11 both for separating the recording medium P from the conveying belt 7 after image formation. Feed rollers 12 and a guide 13 both for feeding the recording medium P from a stocker not shown to the conveying belt 7 are disposed upstream along the conveying belt 7, while a fixing unit 14 and a guide 15 both for fixing inks to the recording medium P after separation and conveying it to a discharged-paper stocker not shown are disposed downstream along the conveying belt 7. The ink-jet recorder 1 furthermore has therein: a recording medium locator 16 disposed in a position facing the ejection heads 2 with the conveying belt 7 therebetween; and a solvent recovery part which comprises an exhaust fan 17 and a solvent vapor adsorbent 18 and is for recovering the solvent vapor generated from the ink compositions. The vapor within the apparatus is discharged outside through the recovery part.

As the feed rollers 12 can be used known rollers. The rollers are disposed so as to have the enhanced ability to feed a recording medium. There are cases where dirt, paper dust, and the like are adherent to the recording medium P. It is hence desirable to remove these with the rollers. The recordingmedium P fed by the feed rollers is sent to the conveying belt 7 through the guide 13. The backside of the conveying belt 7 (preferably, the backside is metallic) has been grounded through the roller 6A. The recording medium sent is electrostatically sucked on the conveying belt by means of the electrostatic sucker 9. In Fig. 1, this electrostatic sucking is achieved with a scorotron charging device connected to a negative high-voltage power source. By the action of the electrostatic sucker 9, the recording medium P is electrostatically sucked tightly on the conveying belt 7 and the surface of the recording medium is evenly charged. Although the electrostatic sucker in this apparatus is used also as a device for charging the recording medium, a charging device may be separately disposed. The recording medium P charged is conveyed by the conveying belt 7 to the ejection head part, where a recording signal voltage is superimposed using the charge potential as a bias to thereby form an ink-jet image electrostatically. The recording medium P on which the image has been formed is treated with the charge eraser 10 to remove the residual charges, separated from the conveying belt 7 by the mechanical means 11, and then sent to the fixing part. The recording medium P separated is sent to the image fixing unit 14 to conduct image fixing. The recording medium P after the fixing passes through the guide 15 and is discharged to the discharged-paper stocker not shown. This apparatus has a recovery unit for recovering the solvent vapor generated from the ink compositions. The recovery unit comprises a solvent vapor adsorbent 18. The gases in the apparatus, which contain the solvent vapor, are introduced into the adsorbent with an exhaust fan 17. After the vapor is adsorptively recovered, the gases are discharged from the apparatus. The constitution of this apparatus should not be construed as being limited to the example shown above. The number, shape, and relative position of constituent devices, such as the rollers and the charging device, the polarity of charges, etc. can be selected at will. Furthermore, although the system described above is for four-color recording, it may be modified to constitute a system for printing in a larger number of colors in which the four-color inks are used in combination with a light-color ink or a special-color ink.

The ink-jet recorder for ink-jet recording described above comprises the ejection heads 2 and the ink circulation system 3. The ink circulation system 3 comprises ink tanks, ink circulators, ink composition regulators, ink temperature controllers, etc. The ink tanks may have a stirrer therein.

As each of the ejection heads 2 can be used a single-channel head, multi-channel head, or full-line head. The main scanning for the heads is conducted by the rotation of the conveying belt 7.

Ink-jet heads suitable for use in the invention are ones for the ink-jet recording technique in which charged particles are electrophoresed in an ink channel to increase the ink concentration around the orifice and the concentrated

ink is ejected. This ejection of ink droplets is mainly based on the electrostatic attraction caused by the recording medium or by the counter electrode disposed on the back of the recording medium. Consequently, in the case where the recording medium or the counter electrode does not face the heads or where no voltage is applied to the recording medium or counter electrode which is located so as to face the heads, ejection of ink droplets does not occur even when a voltage is accidentally applied to the ejection electrode or an oscillation is given. The inside of the apparatus is hence prevented from being fouled.

An ejection head suitable for use in the ink-jet apparatus described above is shown in Figs. 2 and 3. As shown in Figs. 2 and 3, the ink-jet head 70 has: an electrically insulating substrate 74 constituting the upper wall of an ink channel 72 in which an ink flow Q in one direction is formed; and ejection parts 76 for ejecting an ink toward a recording medium P. The ejection parts 76 each have an ink guide part 78, by which ink droplets G flown from the ink channel 72 are guided to the recording medium P. The substrate 74 has openings 75 through which the ink guide parts 78 have penetrated respectively. An ink meniscus 42 has been formed in the space between each ink guide part 78 and the inner wall of the corresponding opening 75. The gap d between the ink guide parts 78 and the recording medium P is preferably about from 200 to 1,000 $\mu$m. The ink guide parts 78 are fixed at their lower ends to a supporting rod part 40.

The substrate 74 has: an insulating layer 44 which separates two ejection electrodes at a given distance to electrically insulate these from each other; first ejection electrodes 46 formed on the upper side of the insulating layer 44; an insulating layer 48 which covers the first ejection electrodes 46; guard electrodes 50 formed on the upper side of the insulating layer 48; and an insulating layer 52 which covers the guard electrodes 50. The substrate 74 further has: second ejection electrodes 56 formed on the lower side of the insulating layer 44; and an insulating layer 58 which covers the second ejection electrodes 56. The guard electrodes 50 are disposed for the purpose of preventing the voltage applied to a first ejection electrode 46 or a second ejection electrode 56 from exerting an influence in electric field on the adjacent ejection parts.

Furthermore, the ink-jet head 70 has a suspended conductive plate 62 disposed in an electrically suspended state. This suspended conductive plate 62 not only constitutes the bottom of the ink channel 72, but also causes positively charged ink particles (charged particles) R to migrate upward (i.e., toward the recording medium) in the ink channel 72 based on the induced voltage stationarily caused by the ejection voltage applied in pulses to first ejection electrodes 46 and second ejection electrodes 56. A coating film 64 which is electrically insulating has been formed on the surface of the suspended conductive plate 62 to prevent the ink from fluctuating in properties or component proportion due to charge injection thereinto, etc. The electrical resistivity of the insulating coating film is preferably $10^{12}$ $\Omega\cdot$cm or higher, more preferably $10^{13}$ $\Omega\cdot$cm or higher. The insulating coating film desirably is resistant to corrosion by the ink, because this coating film prevents the suspended conductive plate 62 from being corroded by the ink. The lower side of the suspended conductive plate 62 is covered with an insulating member 66. Due to such constitution, the suspended conductive plate 62 is in a completely electrically insulated state.

The number of suspended conductive plates 62 is at leastoneperheadunit. (For example, in the case of an apparatus having four heads C, M, Y, and K, each head unit has at least one suspended conductive plate, and the head unit C and the head unit M do not have a common suspended conductive plate.)

As shown in Fig. 3, an ink is flown from the ink-jet head 70 to record an image on the recording medium P. This recording is conducted in the following manner. The ink in the ink channel 72 is circulated to thereby cause an ink flow Q. In this state, a given voltage (e.g., +100 V) is applied to the guard electrodes 50. Furthermore, a positive voltage is applied to the first ejection electrodes 46, second ejection electrodes 56, and recording medium P so that an electric field in which positively charged particles R in the ink droplets G flown from the openings 75 after having been guided by the ink guide parts 78 are attracted by and flown to the recording medium P is formed in the space between the first and second ejection electrodes 46 and 56 and the recording medium P. (When the gap d is 500 $\mu$m, this voltage application is conducted desirably so as to form a potential difference of about from 1 kV to 3.0 kV.)

In that state, a pulsed voltage is applied to the first ejection electrodes 46 and the second ejection electrodes 56 according to image signals. As a result, ink droplets G having a heightened charged-particle concentration is ejected from the openings 75. (For example, in the case where the initial charged-particle concentration is from 3 to 15%, the ink droplets G have a charged-particle concentration heightened to 30% or above.)

Prior to this operation, the values of voltage to be applied to the first ejection electrodes 46 and the second ejection electrodes 56 are regulated beforehand so that ink droplets G are ejected only when a pulsed voltage is applied to both of a first ejection electrode 46 and the corresponding second ejection electrode 56.

As described above, upon application of apulsedpositive voltage, ink droplets G fly from the openings 75 after having been guided by the ink guide parts 78 and adhere to the recording medium P. Simultaneously with this, a positive induced voltage generates in the suspended conductive plate 62 due to the positive voltage applied to the first ejection electrodes 46 and the second ejection electrodes 56. Even when the voltage applied to the first ejection electrodes 46 and the second ejection electrodes 56 is a pulsed voltage, the induced voltage is an almost stationary voltage. Consequently, by the action of the electric field formed in the area between the suspended conductive plate 62 and guard electrodes 50 and the recording medium P, the positively charged particles R present in the ink channel 72 receive a

force which moves them upward. As a result, the concentration of charged particles R increases around the substrate 74. In the case where the number of ejection parts used (i.e., channels from which ink droplets are ejected) is large as shown in Fig. 3, a larger number of charged particles are necessary for ejection. However, the use of a large number of the first ejection electrodes 46 and the second ejection electrodes 56 elevates the voltage induced in the suspended conductive plate 62 and, hence, the number of charged particles R migrating toward the recording medium increases.

Although the embodiment described above uses colored particles, which have been positively charged, the colored particles may have been negatively charged. In this case, the polarity for each charging operation is reversed.

It is preferred in the invention that after ink ejection to a recording medium, the ink should be fixed with an appropriate heating device. The heating device to be used can be a contact type heater such as a heating roller, heating block, or heating belt or a non-contact type heater such as a dryer, infrared lamp, visible-light lamp, ultraviolet lamp, or hot-air oven. These heaters are preferably disposed so as to connect with and united to the ink-jet recorder. The temperature of the recording medium at the time of fixing is preferably in the range of from 40 to 200˚C from the standpoint of ease of fixing. The period of fixing is preferably in the range of from 1 microsecond to 20 seconds.

[Replenishment of Ink Composition]

In the ink-jet recording technique utilizing an electrostatic field, charged particles in the ink composition are concentrated before ejection. Consequently, when the ink composition is ejected over a prolonged time period, the amount of charged particles in the ink composition decreases, resulting in a reduced electrical conductivity of the ink composition. Furthermore, the ratio of the electrical conductivity of the charged particles to the electrical conductivity of the ink composition also changes. In addition, the average particle diameter of the charged particles decreases because charged particles having a larger particle diameter tend to be ejected preferentially as compared with charged particles having a smaller particle diameter. Moreover, the viscosity of the ink composition changes because the solid content in the composition changes.

These changes in properties result in ejection failures and in recorded images having a reduced optical density or ink blurring. An ink composition having a higher concentration (higher solid concentration) than the ink composition fed to the ink tank at the beginning is hence supplied. Thus, the amount of charged particles can be prevented from decreasing, and the electrical conductivity of the ink composition and the ratio of the electrical conductivity of the charged particles to the electrical conductivity of the ink composition can be kept in respective given ranges. Furthermore, an average particle diameter and a viscosity can be maintained. In addition, by thus keeping the properties of the ink composition in given ranges, ink ejection is evenly conducted stably over long. This replenishment is conducted mechanically or manually preferably after the value of a property, e.g., electrical conductivity or optical density, of the ink being used is detected to calculate the shortage. It is also possible to conduct the replenishment mechanically or manually based on the amount of an ink composition to be used, which is calculated from image data.

[Recording Medium]

Various recording media can be used in the invention according to applications. For example, when paper, a plastic film, a metal, paper coated with a plastic or metal by laminating or vapor deposition, a plastic film coated with a metal by laminating or vapor deposition, or the like is used to conduct ink-j et recording, then a printed matter can be directly obtained. When a substrate such as one obtained by roughening a surface of a sheet made of a metal, e.g., aluminum, is used, an offset printing plate can be obtained. When a plastic substrate or the like is used, a flexographic printing plate or a color filter for liquid-crystal displays can be obtained. The shape of the recording medium may be planar such as sheet form or three-dimensional such as cylindrical. Furthermore, when a silicon wafer or wiring board is used as a recording medium, the printing method of the invention is applicable to the production of a semiconductor device or printed wiring board.

By combining the ink composition, ink-jet recorder, and ink composition replenishment described above, image-bearing matters having high image quality with no ink blurring and a high image density can be stably obtained over long.

[Examples]

The invention will be explained below in detail by reference to Examples, but the invention should not be construed as being limited to these Examples.

Synthesis of Onium Salt Monomers

[Onium Salt Monomer 1]

Into a three-necked flask were introduced 60 g of N,N-dimethylaminoethyl methacrylate (manufactured by Tokyo Kasei Kogyo Co, Ltd.) and 145 g of toluene (manufactured by Wako Pure Chemical Industries, Ltd.). The contents were cooled at 0˚C, and 85.3 g of methyl p-toluenesulfonate (manufactured by Wako Pure Chemical Industries, Ltd.) was added dropwise thereto over 1 hour. Thereafter, the mixture was reacted at room temperature for 5 hours with stirring. After completion of the reaction, the reaction mixture was poured into 2 L of hexane. The resultant precipitate was taken out by filtration and vacuum-dried. Thus, N,N,N-trimethylammonium ethyl methacrylate p-toluenesulfonic acid salt was obtained as an ammonium salt monomer. (Yield, about 127 g)

[Onium Salt Monomer 2]

The same procedure as for synthesizing onium salt monomer 1 was repeated, except that 80 g of N,N-diethylaminoethyl methacrylate (manufactured by Tokyo Kogyo Co., Ltd.) was used in place of the N,N-dimethylaminoethyl methacrylate, and that the amounts of toluene and methyl p-toluenesulfonate to be used were changed to 150 g and 90 g, respectively. As a result, N,N-diethyl-N-methylammonium ethylmethacrylate p-toluenesulfonic acid salt was obtained in an amount of about 135 g.

[Onium Salt Monomer 3]

The sameprocedure as for synthesizing onium salt monomer 1 was repeated, except that 40 g of vinylpyridine (manufactured by Nacalai Tesque, Inc.) was used in place of the N,N-dimethylaminoethyl methacrylate and the amount of toluene to be used was changed to 150 g. As a result, N-methylvinylpyridine p-toluenesulfonic acid salt was obtained in an amount of about 110 g.

Synthesis of Onium Salt Group-Containing Polymers

[Onium Salt Group-Containing Polymer 1]

Into a three-necked flask were introduced 70 g of butyl methacrylate (manufactured by Wako Pure Chemical Industries, Ltd.), 25 g of methyl methacrylate (manufactured by Wako Pure Chemical Industries, Ltd.), and 5 g of onium salt monomer 1 together with 230 g of 1-methoxy-2-propanol (MFG) and 2 g of water. The contents were heated to 80˚C in an oil bath and stirred for 30 minutes while introducing nitrogen into the flask at a rate of 30 L/min. Thereafter, 0.3 g of azo initiator V601 (dimethyl 2,2'-azobis(isobutyrate) manufactured by Wako Pure Chemical Industries, Ltd.) was added thereto, and the mixture was polymerized at 80˚C for 5 hours with stirring. After the 5 hours, 0.15 g of V601 was further added to the reaction mixture, and the resultant mixture was polymerized at an elevated temperature of 90˚C for 2 hours with stirring. After completion of the polymerization reaction, the reaction mixture was cooled to room temperature and then poured into 3 L of water to conduct purification by reprecipitation. The precipitate was taken out by filtration and vacuum-dried to obtain about 95 g of onium salt group-containing polymer 1. The polymer obtained had a weight-average molecular weight (MW) of 34,000.

[Onium Salt Group-Containing Polymer 2]

The same procedure as for synthesizing onium salt group-containing polymer 1 was repeated, except that 95 g of benzyl methacrylate was used in place of 70 g of butyl methacrylate and 25 g of methyl methacrylate. As a result, onium salt group-containing polymer 2 was obtained in an amount of about 97 g. The weight-average molecular weight thereof was 28, 000.

[Onium Salt Group-Containing Polymer 3]

The same procedure as for synthesizing onium salt group-containing polymer 1 was repeated, except that onium salt monomer 2 was used in place of onium salt monomer 1. As a result, onium salt group-containing polymer 3 was obtained in an amount of about 95 g. The weight-average molecular weight thereof was 33,000.

[Onium Salt Group-Containing Polymer 4]

The same procedure as for synthesizing onium salt group-containing polymer 1 was repeated, except that onium salt monomer 3 was used in place of onium salt monomer 1. As a result, onium salt group-containing polymer 4 was obtained in an amount of about 94 g. The weight-average molecular weight thereof was 28,000.

[Onium Salt Group-Containing Polymer 5]

The same procedure as for synthesizing onium salt group-containing polymer 1 was repeated, except that 90 g of benzyl methacrylate was used in place of 70 g of butyl methacrylate and 25 g of methyl methacrylate and that 10 g of onium salt monomer 2 was used in place of onium salt monomer 1. As a result, onium salt group-containing polymer 5 was obtained in an amount of about 97 g. The weight-average molecular weight thereof was 28,000.

[Onium Salt Group-Containing Polymer 6]

The same procedure as for synthesizing onium salt group-containing polymer 1 was repeated, except that the amount of butyl methacrylate to be used was changed to 30 g, 60 g of styrene (manufactured by Wako Pure Chemical Industries, Ltd.) was used in place of 25 g of methyl methacrylate, and the amount of onium salt monomer 1 was changed to 10 g. As a result, onium salt group-containing polymer 6 was obtained in an amount of about 96 g. The weight-average molecular weight thereof was 26,000.

[Onium Salt Group-Containing Polymer 7]

Into a three-necked flask were introduced 100 g of polyethyleneimine SP 400 (manufactured by Nippon Shokubai Co., Ltd.) and 200 g of water. The contents were cooled to 0˚C, and 100 g of methyl p-toluenesulfonate (manufactured by Wako Pure Chemical Industries, Ltd.) was added dropwise thereto over 1 hour. Thereafter, the mixture was reacted at room temperature for 5 hours with stirring. After completion of the reaction, the reaction mixture was poured into 3 L of acetone. The resultant precipitate was taken out by decantation and the solid obtained was vacuum-dried. Thus, about 186 g of onium salt group-containing polymer 7 (polyethyleneimine p-toluenesulfonic acid salt) was obtained. The polymer obtained had a weight-average molecular weight (MW) of 16, 000.

EXAMPLE 1

<Materials Used>

The following materials were used in Example 1.

- Cyan pigment (colorant); phthalocyanine pigment C.I. Pigment Blue (15:3) (LIONOL BLUE FG-7350, manufactured by Toyo Ink Mfg. Co., Ltd.)
- Coating Material [butyl acrylate/methyl methacrylate (75/25 by weight) copolymer (manufactured by Aldrich Co.)]
- Onium salt compound [tetra-n-butylammonium tosylate (manufactured by Wako Pure Chemical Industries, Ltd.)]
- Dispersant [BZ-2]
- Charge control agent [CT-1]
- Dispersant; Isoper G (manufactured by Exxon Chemical Co.)

The structures of dispersant [BZ-2] and charge control agent [CT-1] are shown below.

[BZ−2]

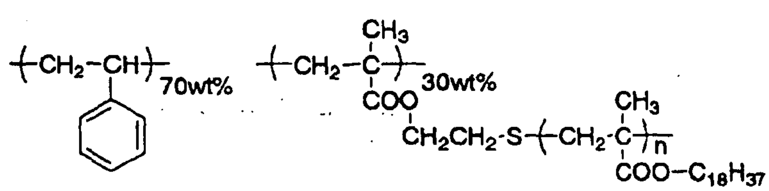

[CT-1] 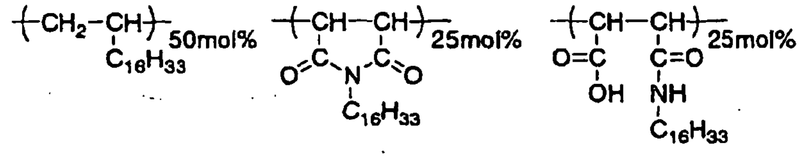

Dispersant [BZ-2] was obtained by radical-polymerizing stearyl methacrylate in the presence of 2-mercaptoethanol, reacting the resultant polymer with methacrylic anhydride to obtain a stearyl methacrylate polymer having a methacryloyl group at an end (weight-average molecular weight, 7,600), and then radical-polymerizing styrene with this polymer. The weight-average molecular weight thereof was 110,000.

Charge control agent [CT-1] was obtained by reacting 1-hexadecylamine with a copolymer of 1-octadecene and maleic anhydride. The weight-average molecular weight thereof was 17,000.

<Production of Ink Composition [BC-1]>

Into bench kneader PBV-0.1 manufactured by Irie Shokai Co., Ltd. were introduced 10 g of the cyan pigment, 18 g of the coating material [butylacrylate/methylmethacrylate (75/25 by weight) copolymer (manufactured by Aldrich Co.)], and 2 g of the onium salt compound [tetra-n-butylammonium tosylate (manufactured by Wako Pure Chemical Industries, Ltd.)]. The heater temperature was set at 100˚C and the ingredients were kneaded together for 2 hours. Thirty grams of the mixture obtained was roughly powdered with Trio Blender, manufactured by Trioscience Ltd., and then pulverized with sample mill Type SK-M10, manufactured by Kyoritsu-riko Co. Thirty grams of the powder obtained by the pulverization was treated with a paint shaker manufactured by Toyo Seiki Seisaku-Sho, Ltd., together with 7.5 g of dispersant [BZ-2], 75 g of Isoper G, and glass beads having a diameter of about 3.0 mm to conduct preliminary dispersion. After the glass beads were removed, the dispersion was treated with Dyno-Mill Type KDL, manufactured by Shinmaru Enterprises Corp., together with zirconia ceramic beads having a diameter of about 0.6 mm at a constant internal temperature of 25˚C for 5 hours and then at 45˚C for 5 hours at a revolution speed of 2,000 rpm to disperse (reduce into particles) the solid ingredients. The zirconia ceramic beads were removed from the dispersion obtained. To the dispersion were added 316 g of Isoper G and 0.6 g of charge control agent [CT-1]. Thus, ink composition [EC-1] was obtained.

The particulate ingredient in the ink composition obtained had a particle diameter of 0.93 $\mu$m. The proportion of particles not larger than 0.2 $\mu$m therein was 0.6% or lower.

<Ink-Jet Recording/Image Evaluation>

The ink composition [EC-1] obtained in Example 1 was charged into an ink tank of the ink-jet recorder shown in Figs. 1 to 3. As the ejection head was used an 833-channel head of the type shown in Fig. 2 of 150 dpi (three-line zigzag arrangement with a channel density of 50 dpi). As a fixing device was used a heating roller made of silicone rubber and having a 1-kW built-in heater. An immersion heater and stirring blades were disposed as an ink temperature controller in the ink tank, and the ink temperature was set at 30˚C. The temperature of the ink was controlled with a thermostat while rotating the stirring blades at 30 rpm. The stirring blades were used also as a stirrer for preventing sedimentation/aggregation. The walls of the ink channel were partly made transparent, and an LED element and a light detection element were disposed respectively on both sides of the transparent part. The concentration of the ink was regulated by introducing ink diluent (Isoper G) or concentrated ink (the ink composition described above whose solid concentration had been increased twofold) based on output signals from the light detection element. Lightly coated paper for offset printing was used as a recording medium. Dust particles present on the surface of the recording medium were removed by air pump suction. Thereafter, the ejection head was brought near to the recording medium to the image formation position. Data on the image to be recorded were sent to an arithmetic image data control unit, and the ink composition was ejected while successivelymoving the ejection head and conveying the recording medium by the rotation of the conveying belt to thereby form an image at a resolution of 2,400 dpi. The conveying belt used was one obtained by laminating a metallic belt with a polyimide film. A line-form marker was disposed along the conveyance direction near one edge of the conveying belt. The position of this marker was optically read with the conveying belt locator, and the position controller was operated during the image formation. In this recording, the distance between the ejection head and the recording medium was kept at 0.5 mmbased on outputs from an optical gap detector. In preparation for ejection, the surface potential of the recording medium was kept at -1.5 kV. A pulse voltage of +500 V was applied (pulse width, 50 $\mu$sec) for ejection to conduct image formation at a driving frequency of 15 kHz.

The resultant recording medium bearing a gray-scale image (printed matter) was evaluated for streaks and ink blurring.

<Charge Evaluation>

The amount of charges in the ink composition was determined from the specific conductivity thereof measured with the LCR meter and electrodes for liquids (Type LP-05, manufactured by Kawaguchi Denki Seisaku-Sho Co., Ltd.) under the conditions of an applied voltage of 5 V and a frequency of 1 kHz. The conductivity of the ink particles was determined by subtracting the specific conductivity of the supernatant obtained by centrifuging the ink composition from the overall specific conductivity of the ink composition. The centrifuging was conducted with a small high-speed cooled centrifuge (SRX-201, manufactured by Tomy Seiko Co., Ltd.) for 30 minutes under the conditions of a rotational speed of 14,500 rpm and a temperature of 23°C.

The efficiency of charge generation in ink particles was determined using the following equation.

$$\text{Efficiency of charge generation in ink particles (\%)} = [(\text{amount of charges in ink particles, Q1})/(\text{amount of charges in ink composition, Q2})]\times 100$$

Long-term charge stability was determined using the following equation from the amount of charges Q3 in the ink composition which had been allowed to stand in a polyethylene bottle for 1 week under the thermal conditions of a temperature of 50°C and a humidity of 80% and from the amount of charges Q4 in the ink composition before the standing.

$$\text{Charge amount change with time (\%)} = (Q3/Q4)\times 100$$

EXAMPLE 2

The same procedure for ink production as in Example 1 was conducted, except that onium salt group-containing polymer 1 was used in place of the coating material [butyl acrylate/methyl methacrylate (75/25 by weight) copolymer (manufactured by Aldrich Co.)] as a material to be used, and that the onium salt compound was not added. Thus, ink [EC-2] was produced. The particulate ingredient in the ink composition obtained had a particle diameter of 0.99 μm, and the proportion of particles not larger than 0.2 μm therein was 0.5% or lower. This ink was used to conduct charge evaluation and ink-jet recording.

EXAMPLE 3

The same procedure for ink production as in Example 1 was conducted, except that onium salt group-containing polymer 7 was used in place of the onium salt compound as a material to be used. Thus, ink [EC-3] was produced. The particulate ingredient in the ink composition obtained had a particle diameter of 1. 03 μm, and the proportion of particles not larger than 0.2 μm therein was 0.5% or lower. This ink was used to conduct charge evaluation and ink-jet recording.

COMPARATIVE EXAMPLE 1

The same procedure as that for the production of ink composition [EC-1] in Example 1 was conducted, except that the onium salt compound [tetra-n-butylammonium tosylate (manufactured by Wako Pure Chemical Industries, Ltd.)] was not added. Thus, ink composition [RC-1] was produced. The particulate ingredient in the ink composition had a particle diameter of 0. 99 μm, and the proportion of particles not larger than 0.2 μm was 0.6% or lower. This ink was used to conduct charge evaluation and ink-jet printing.

Table 1

| | Amount of charges in ink particles (pS/cm) | Efficiency of charge generation in ink particles (%) | Long-term charge stability[1)] | Image quality in ink-jet printing[2)] |
|---|---|---|---|---|
| Example 1 | 840 | 94 | ○ | ○ |
| Example 2 | 900 | 96 | ○ | ○ |
| Example 3 | 890 | 93 | ○ | ○ |
| Comparative Example 1 | 520 | 73 | × | Δ |

1) Long-Term Charge Stability
○: Charge amount change with time (%) is 95 or higher.
Δ: Charge amount change with time (%) is below 95 and 80 or higher.
×: Charge amount change with time (%) is below 80.
2) Image Quality in Ink-Jet Recording
The image formed by the recording was visually evaluated for blurring.
○: No blurring.
Δ: Slight blurring occurred.
×: Blurring occurred.

As shown in Examples 1 to 3, since the colorant particles contain at least one onium salt, the efficiency of charge generation in the ink particles and long-term charge stability are improved and the ink particles have a sufficiently high rate of electrophoresis in ejection nozzles in this ink-jet recording technique, resulting in sufficient concentration of ink particles. Consequently, images of satisfactory quality with no blurring can be obtained.

The onium salt may be blended with a coating material as in Example 1, ormaybe incorporated as a constituent ingredient into a coating material as in Example 2.

The results in Comparative Example 1 are for an ink composition employing an ordinary coating material alone, i.e., a coating material which does not contain the onium salt. The results show that the efficiency of charge generation in the ink particles and long-term charge stability are insufficient. The ink particles have a low rate of electrophoresis in ejection nozzles in this ink-jet recording technique and sufficient concentration of ink particles does not occur. Because of this, blurring occurs and images of satisfactory quality are not obtained.

EXAMPLES 4 TO 22

The same procedure as that for the production of ink composition [EC-2] in Example 2 was conducted, except that the coating material was replaced by each of the coating materials shown in Table 2. Thus, ink compositions [EC-4] to [EC-22] were produced.

Table 2

| | Ink composition | Coating material (onium salt group-containing polymer) |
|---|---|---|
| Example 4 | EC-4 | onium salt group-containing polymer 2 |
| Example 5 | EC-5 | onium salt group-containing polymer 3 |
| Example 6 | EC-6 | onium salt group-containing polymer 4 |
| Example 7 | EC-7 | onium salt group-containing polymer 5 |
| Example 8 | EC-8 | onium salt group-containing polymer 6 |
| Example 9 | EC-9 | onium salt group-containing polymer 1/[butyl acrylate/methyl methacrylate (75/25 wt%) copolymer (manufactured by Aldrich Co.)] = 50/50 (wt%) |
| Example 10 | EC-10 | onium salt group-containing polymer 1/ onium salt group-containing polymer 2 = 75/25 (wt%) |
| Example 11 | EC-11 | onium salt group-containing polymer 1/ onium salt group-containing polymer 2 = 50/50 (wt%) |

(continued)

| | Ink composition | Coating material (onium salt group-containing polymer) |
|---|---|---|
| Example 12 | EC-12 | onium salt group-containing polymer 1/ onium salt group-containing polymer 2 = 25/75 (wt%) |
| Example 13 | EC-13 | onium salt group-containing polymer 1/ onium salt group-containing polymer 3 = 50/50 (wt%) |
| Example 14 | EC-14 | onium salt group-containing polymer 1/ onium salt group-containing polymer 4 = 50/50 (wt%) |
| Example 15 | EC-15 | onium salt group-containing polymer 1/ onium salt group-containing polymer 5 = 50/50 (wt%) |
| Example 16 | EC-16 | onium salt group-containing polymer 3/ onium salt group-containing polymer 6 = 50/50 (wt%) |
| Example 17 | EC-17 | onium salt group-containing polymer 4/ onium salt group-containing polymer 7 = 50/50 (wt%) |
| Example 18 | EC-18 | onium salt group-containing polymer 1/ onium salt group-containing polymer 2/onium salt group-containing polymer 3 = 50/25/25 (wt%) |
| Example 19 | EC-19 | onium salt group-containing polymer 3/ onium salt group-containing polymer 4/onium salt group-containing polymer 5 = 50/25/25 (wt%) |
| Example 20 | EC-20 | onium salt group-containing polymer 4/ onium salt group-containing polymer 2/onium salt group-containing polymer 3 = 50/25/25 (wt%) |
| Example 21 | EC-21 | onium salt group-containing polymer 5/ onium salt group-containing polymer 2/onium salt group-containing polymer 3 = 40/30/30 (wt%) |
| Example 22 | EC-22 | onium salt group-containing polymer 6/ onium salt group-containing polymer 4/onium salt group-containing polymer 3 = 40/30/30 (wt%) |

The ink compositions were evaluated in the same manner as in Example 1. The results obtained were the same as in Examples 1 to 3. The followingwas hence found. When the coating materials used in Examples 4 to 22 are employed, the efficiency of charge generation in the ink particles and long-term charge stability are improved and the ink particles have a sufficiently high rate of electrophoresis in ejection nozzles in this ink-jet recording technique, resulting in sufficient concentration of ink particles. Consequently, images of satisfactory quality with no blurring can be obtained.

EXAMPLES 23 TO 44

The same procedure as that for the production of ink composition [EC-1] in Example 1 was conducted, except that the onium salt compound was replaced by each of the onium salt compounds shown in Table 3. Thus, ink compositions [EC-23] to [EC-44] were produced. These ink compositions were evaluated in the same manner as in Example 1, and the same results as in Examples 1 to 3 were obtained.

Table 3

| | Ink composition | Onium salt compound | Amount (g) |
|---|---|---|---|
| Example 23 | EC-23 | tetra-n-butylammonium tosylate (manufactured by Wako Pure Chemical Industries, Ltd.) | 3 |
| Example 24 | EC-24 | tetra-n-butylammonium tosylate (manufactured by Wako Pure Chemical Industries, Ltd.) | 4 |
| Example 25 | EC-25 | tetra-n-butylammonium salicylate (manufactured by Wako Pure Chemical Industries, Ltd.) | 2 |
| Example 26 | EC-26 | tetra-n-butylammonium chloride (manufactured by Wako Pure Chemical Industries, Ltd.) | 2 |

(continued)

| | Ink composition | Onium salt compound | Amount (g) |
|---|---|---|---|
| Example 27 | EC-27 | tetra-n-butylammonium salicylate (manufactured by Wako Pure Chemical Industries, Ltd.) | 2 |
| Example 28 | EC-28 | tetraethylammonium tosylate (manufactured by Wako Pure Chemical Industries, Ltd.) | 2 |
| Example 29 | EC-29 | n-methylpyridinium tosylate (manufactured by Wako Pure Chemical Industries, Ltd.) | 2 |
| Example 30 | EC-30 | tetraphenylphosphonium chloride (manufactured by Aldrich Co.) | 2 |
| Example 31 | EC-31 | tetra-n-butylphosphonium chloride (manufactured by Aldrich Co.) | 2 |
| Example 32 | EC-32 | tetraethylphosphonium chloride (manufactured by Aldrich Co.) | 2 |
| Example 33 | EC-33 | triphenyl(2-pyridylmethyl)phosphonium chloride (manufactured by Aldrich Co.) | 2 |
| Example 34 | EC-34 | triphenylsulfonium butanesulfonate (manufactured by Aldrich Co.) | 2 |
| Example 35 | EC-35 | triphenylsulfonium triflate (manufactured by Aldrich Co.) | 2 |
| Example 36 | EC-36 | onium salt group-containing polymer 7 | 2 |
| Example 37 | EC-37 | poly(diallylmethylammonium chloride) (manufactured by Aldrich Co.) | 2 |
| Example 38 | EC-38 | poly(4-vinylpyridinium tosylate) (manufactured by Aldrich Co.) | 2 |
| Example 39 | EC-39 | poly(p-xylenetetrahydrothiopheniumchloride) (manufactured by Aldrich Co.) | 2 |
| Example 40 | EC-40 | tetra-n-butylammonium tosylate (manufactured by Wako Pure Chemical Industries, Ltd.)/n-methylpyridinium tosylate (manufactured by Wako Pure Chemical Industries, Ltd.) = 50/50 (wt%) | 2 |
| Example 41 | EC-41 | tetra-n-butylammonium tosylate (manufactured by Wako Pure Chemical Industries, Ltd.)/tetraphenylphosphonium chloride (manufactured by Aldrich Co.) = 50/50 (wt%) | 2 |
| Example 42 | EC-42 | tetraethylammonium tosylate (manufactured by Wako Pure Chemical Industries, Ltd.)/triphenylphosphonium butanesulfonate (manufactured by Aldrich Co.) = 50/50 (wt%) | 2 |
| Example 43 | EC-43 | n-methylpyridinium tosylate (manufactured by Wako Pure Chemical Industries, Ltd.)/onium salt group-containing polymer 7 = 50/50 (wt%) | 2 |
| Example 44 | EC-44 | poly(p-xylenetetrahydrothiophenium chloride) (manufactured by Aldrich Co.)/ onium salt group-containing polymer 7 = 50/50 (wt%) | 2 |

In the invention, the charged particles (ink particles) contain at least one onium salt group. Because of this, the ink particles have improved charge generation efficiency and improved long-term charge stability. When the ink composition is used in image formation by ink-j et recording, the ink particles in the ejection nozzles have a sufficiently high rate of electrophoresis and are sufficiently concentrated and, hence, images of satisfactory quality free fromblurring can be obtained. Consequently, the invention can provide an ink composition for electrostatic ink-jet recording and a method of ink-jet recording, which enable high-quality images to be fixed to a recording medium at a low temperature and a high speed.

## Claims

**1.** An ink composition for electrostatic ink-jet recording comprising:

a dispersion medium; and
a charged particle comprising a colorant and at least one of an onium salt and an onium salt group-containing polymer, wherein the colorant is coated with a coating material comprising a polymer having a unit represented by at least one of general Formulae (1) to (4):

Formula (1) 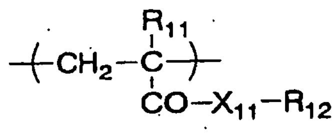

Formula (2) 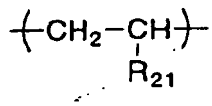

Formula (3) 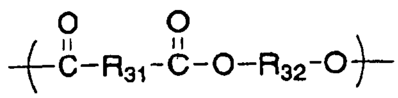

Formula (4) 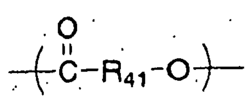

in which $X_{11}$ represents an oxygen atom or $-N(R_{13})-$;
$R_{11}$ represents a hydrogen atom or methyl;
$R_{12}$ represents a hydrocarbon group having 1 to 30 carbon atoms;
$R_{13}$ represents a hydrogen atom or a hydrocarbon group having 1 to 30 carbon atoms;
$R_{21}$ represents a hydrogen atom or a hydrocarbon group having 1 to 20 carbon atoms; and
$R_{31}$, $R_{32}$, and $R_{41}$ each represents a bivalent hydrocarbon group having 1 to 20 carbon atoms.

**2.** An ink composition according to Claim 1, further comprising a dispersant.

**3.** An ink composition according to Claim 2, wherein the dispersant is a polymer having a weight-average molecular weight in the range of 1,000 to 1,000,000 and a polydispersity coefficient (weight-average molecular weight/number-average molecular weight) in the range of 1.0 to 7.0.

**4.** An ink composition according to Claim 1,
wherein the onium salt is at least one compound selected from an ammonium compound, an oxonium compound, a sulfonium compound, a selenonium compound and a phosphonium compound.

**5.** An ink composition according to Claim 1,
wherein the onium salt group-containing polymer has at least one group selected from an ammonium group, an oxonium group, a sulfonium group, a selenonium group and a phosphonium group.

**6.** An ink composition according to Claim 1, wherein the coating material is present in an amount of 0.1 to 40% by weight.

**7.** A method of ink-jet recording, comprising:

flying a droplet of an ink composition as defined in Claim 1 using an electrostatic field.

**Patentansprüche**

1. Tintenzusammensetzung zum elektrostatischen Tintenstrahlaufzeichnen, umfassend:

   ein Dispersionsmedium; und
   ein geladenes Teilchen umfassend einen Farbstoff und wenigstens eines aus einem Oniumsalz und einem eine Oniumsalzgruppe enthaltenden Polymer, wobei der Farbstoff mit einem Beschichtungsmaterial beschichtet ist umfassend ein Polymer, das eine Einheit aufweist, die durch wenigstens der allgemeinen Formel (1) bis (4) dargestellt wird:

Formel (1) 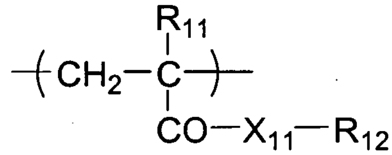

Formel (2) 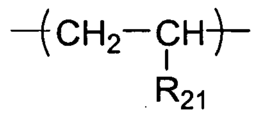

Formel (3) 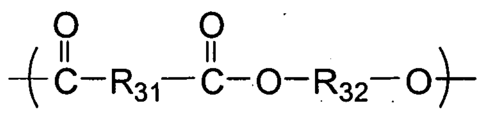

Formel (4) 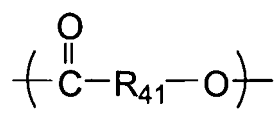

   in denen $X_{11}$ ein Sauerstoffatom oder -N($R_{13}$)- darstellt;
   $R_{11}$ ein Wasserstoffatom oder Methyl darstellt;
   $R_{12}$ eine Kohlenwasserstoffgruppe mit 1 bis 30 Kohlenstoffatomen darstellt;
   $R_{13}$ ein Wasserstoffatom oder eine Kohlenwasserstoffgruppe mit 1 bis 30 Kohlenstoffatomen darstellt;
   $R_{21}$ ein Wasserstoffatom oder eine Kohlenwasserstoffgruppe mit 1 bis 20 Kohlenstoffatomen darstellt; und
   $R_{31}$, $R_{32}$ und $R_{41}$ jeweils eine divalente Kohlenwasserstoffgruppe mit 1 bis 20 Kohlenstoffatomen darstellen.

2. Tintenzusammensetzung gemäß Anspruch 1, ferner umfassend ein Dispergiermittel.

3. Tintenzusammensetzung gemäß Anspruch 2, wobei das Dispergiermittel ein Polymer mit einem gewichtsmittleren Molekulargewicht im Bereich von 1.000 bis 1.000.000 und einem Polydispersitätskoeffizienten (gewichtsmittleres Molekulargewicht/zahlenmittleres Molekulargewicht) im Bereich von 1,0 bis 7,0 ist.

4. Tintenzusammensetzung gemäß Anspruch 1, wobei das Oniumsalz wenigstens eine Verbindung ist, die aus einer Ammoniumverbindung, einer Oxoniumverbindung, einer Sulfoniumverbindung, einer Selenoniumverbindung und einer Phosphoniumverbindung ausgewählt ist.

5. Tintenzusammensetzung gemäß Anspruch 1, wobei das eine Oniumsalzgruppe enthaltende Polymer wenigstens eine Gruppe aufweist, die aus einer Ammoniumgruppe, einer Oxoniumgruppe, einer Sulfoniumgruppe, einer Selenoniumgruppe und einer Phosphoniumgruppe ausgewählt ist.

**6.** Tintenzusammensetzung gemäß Anspruch 1, wobei das Beschichtungsmaterial in einer Menge von 0,1 bis 40 Gew. % vorliegt.

**7.** Verfahren zum Tintenstrahlaufzeichnen, umfassend:

Fliegenlassen eines Tröpfchens einer Tintenzusammensetzung wie in Anspruch 1 definiert unter Verwendung eines elektrostatischen Felds.

## Revendications

**1.** Composition d'encre pour enregistrement par jet d'encre électrostatique comprenant :

un milieu de dispersion ; et
une particule chargée comprenant un colorant et au moins l'un parmi un sel d'onium et un polymère contenant un groupe sel d'onium, dans laquelle le colorant est revêtu d'un matériau de revêtement comprenant un polymère ayant une unité représentée par au moins l'une des Formules générales (1) à (4) :

Formule (1) 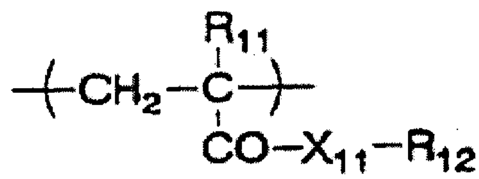

Formule (2) 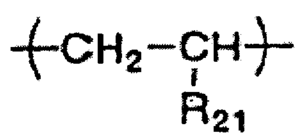

Formule (3) 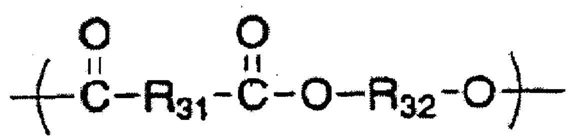

Formule (4) 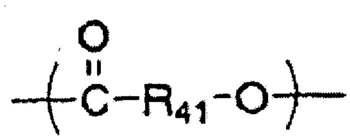

dans lesquelles $X_{11}$ représente un atome d'oxygène ou un groupe -N($R_{13}$)- ;
$R_{11}$ représente un atome d'hydrogène ou un méthyl ;
$R_{12}$ représente un groupe hydrocarboné ayant de 1 à 30 atomes de carbone ;
$R_{13}$ représente un atome d'hydrogène ou un groupe hydrocarboné ayant de 1 à 30 atomes de carbone ;
$R_{21}$ représente un atome d'hydrogène ou un groupe hydrocarboné ayant de 1 à 20 atomes de carbone ; et
$R_{31}$, $R_{32}$, et $R_{41}$ représentent chacun un groupe hydrocarboné divalent ayant de 1 à 20 atomes de carbone.

**2.** Composition d'encre selon la revendication 1, comprenant en outre un dispersant.

**3.** Composition d'encre selon la revendication 2, dans laquelle le dispersant est un polymère ayant une masse moléculaire moyenne en poids se situant dans la plage comprise entre 1 000 et 1 000 000 et un coefficient de polydispersité (masse moléculaire moyenne en poids/masse moléculaire moyenne en nombre) dans la plage comprise entre 1,0 et 7,0.

**4.** Composition d'encre selon la revendication 1,
dans laquelle le sel d'onium est au moins un composé selectionné parmi un composé ammonium, un composé oxonium, un composé sulfonium, un composé sélénonium et un composé phosphonium.

**5.** Composition d'encre selon la revendication 1,
dans laquelle le polymère contenant un groupe sel d'onium a au moins un groupe selectionné parmi un groupe ammonium, un groupe oxonium, un groupe sulfonium, un groupe sélénonium et un groupe phosphonium.

**6.** Composition d'encre selon la revendication 1, dans laquelle le matériau de revêtement est présent en une quantité comprise entre 0,1 et 40 % en poids.

**7.** Procédé d'enregistrement par jet d'encre, comprenant :

la projection d'une gouttelette d'une composition d'encre telle que définie à la revendication 1 en utilisant un champ électrostatique.

FIG. 1

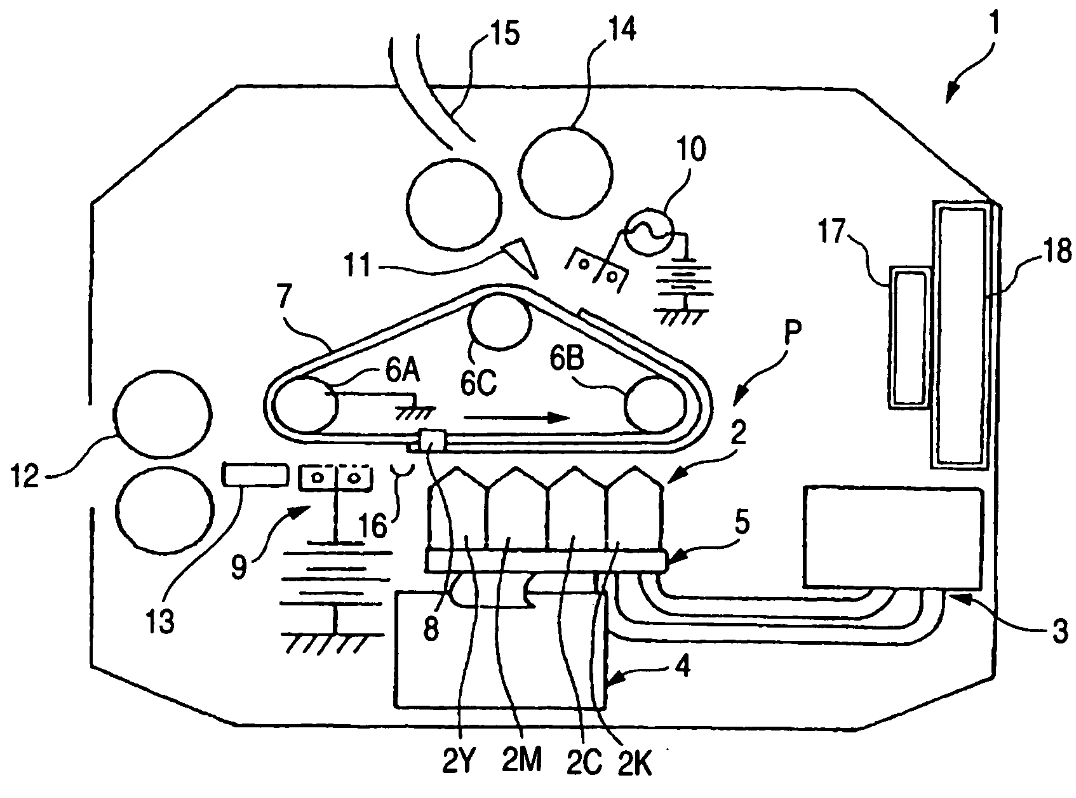

FIG. 2

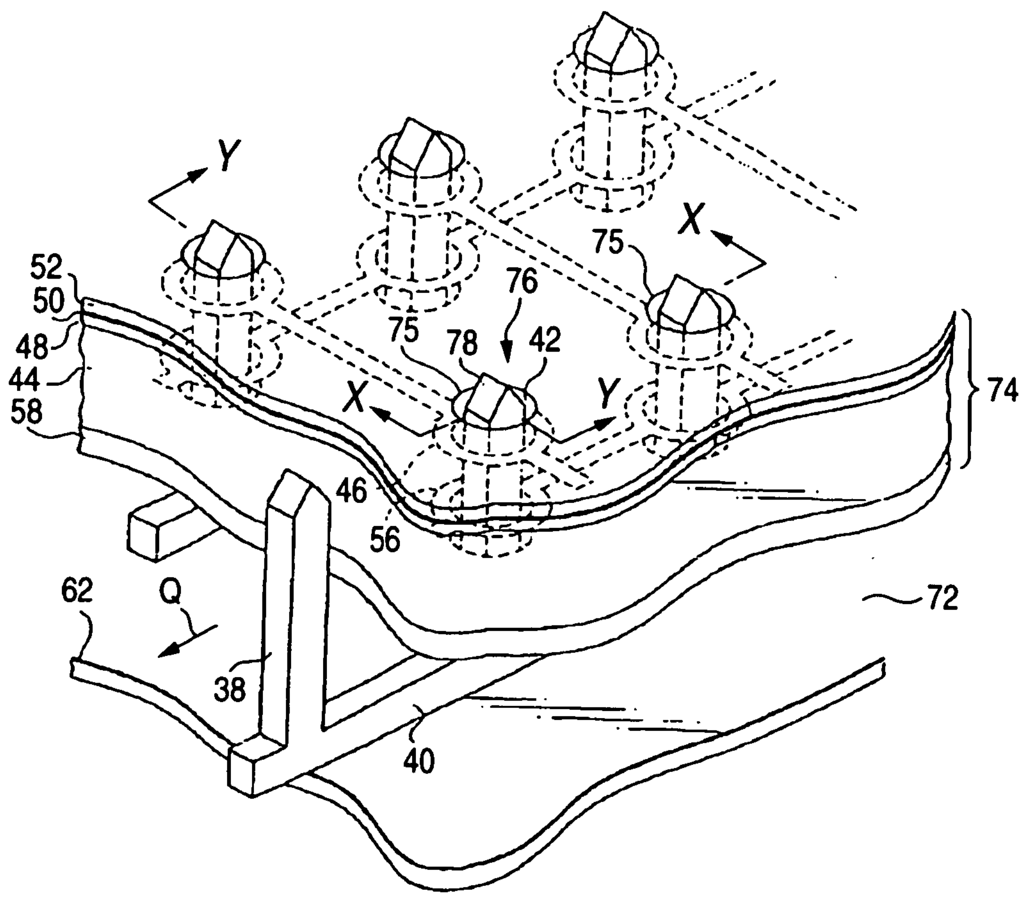

FIG. 3

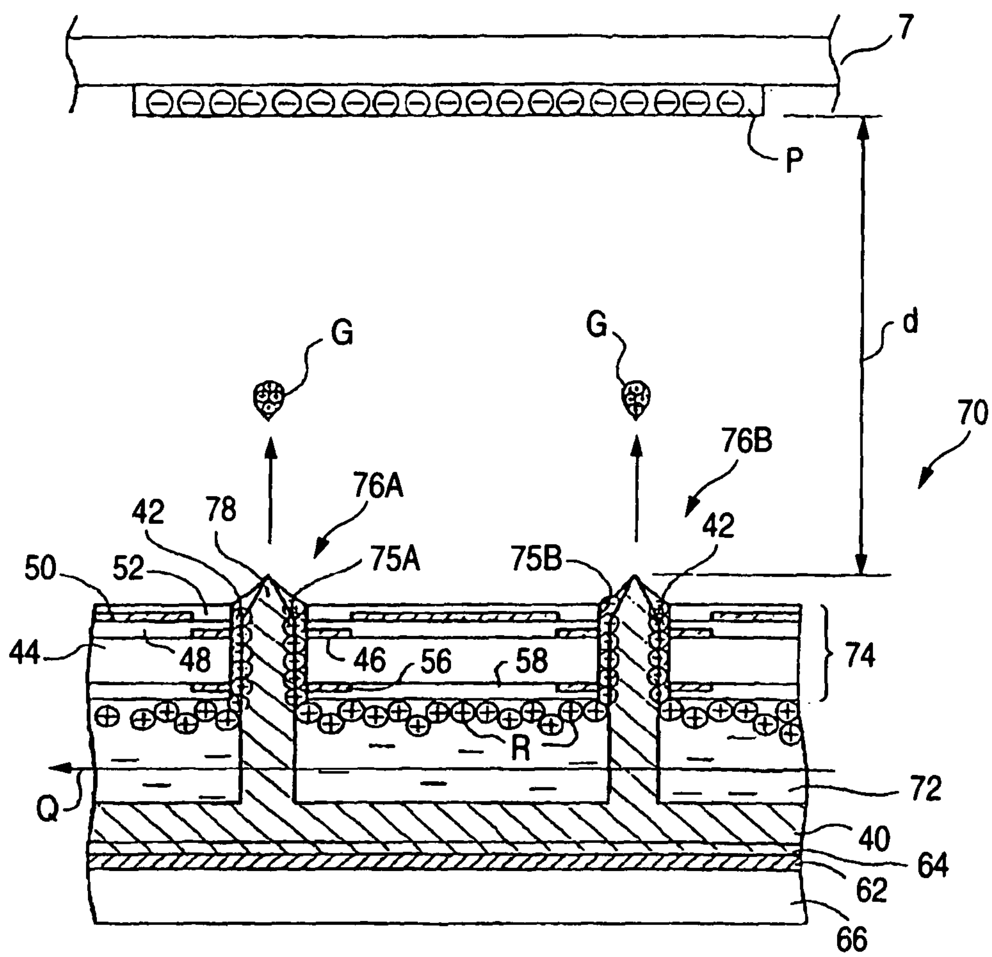
7
P
d
G
G
70
76B
76A
42
78
42
75A
75B
50
52
44
48
46
56
58
74
R
72
Q
40
64
62
66